# EUROPEAN PATENT APPLICATION

(11) **EP 0 600 703 A2**
(43) Date of publication of application: **08.06.1994**
(21) Application number: 93309526.7
(22) Date of filing: 30.11.1993
(51) Int. Cl.: G06F 12/08

(54) **Information processing apparatus capable of simultaneously storing and fetching data**

(30) Priority: 30.11.1992 JP 320375/92
(71) Applicant: FUJITSU LIMITED, Kawasaki-shi, Kanagawa 211 (JP)
(72) Inventor: Sakata, Hideki, c/o Fujitsu Limited, Kawasaki-shi, Kanagawa 211 (JP); Ino, Akitoshi, c/o Fujitsu Limited, Kawasaki-shi, Kanagawa 211 (JP)
(74) Representative: Fenlon, Christine Lesley

(57) **Abstract**

Information processing apparatus includes a central processing unit having an access unit. The access unit includes an address control unit (10), data control unit (20) and MCU interface unit (30) for storing and fetching data corresponding to store addresses and fetch addresses respectively. The address control unit (10) determines whether a fetch address coincides with one of storage addresses. If the fetch address coincides with one of storage addresses, the data fetch operation is suspended until the data corresponding to the store address is stored in the main storage unit. Then, the fetch operation is performed.

Such information processing apparatus can improve the speed of the data fetch operation from a main storage unit to a central processing unit.

## Description

The present invention relates generally to information processing apparatus, more particularly to information processing apparatus intended to increase the processing speed in retrieving data from memory.

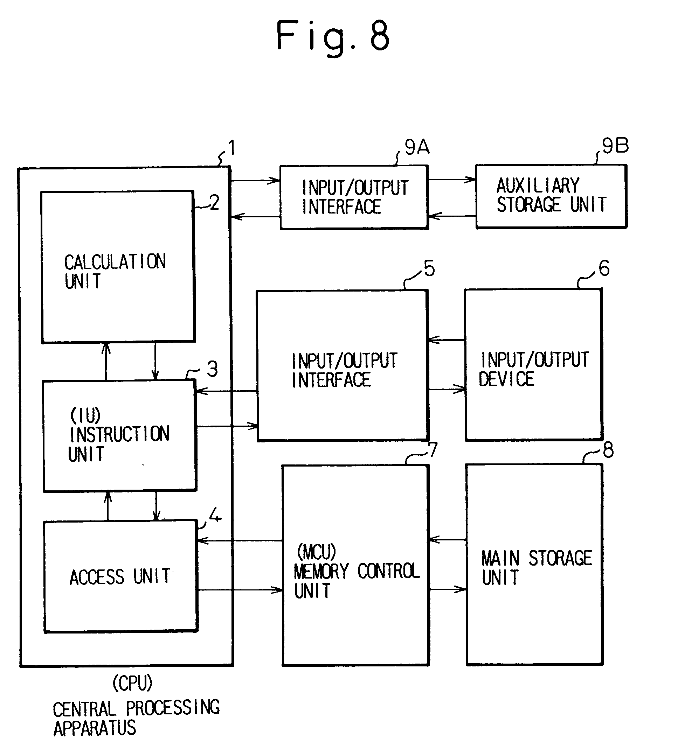

Figure 8 is a block diagram illustrating a previously-considered information processing apparatus. The information processing apparatus includes a control processing unit 1 having an instruction unit 3 for executing instructions. The instruction unit 3 of the control processing unit 1 communicates through an input/output interface 5 with an input/output device 6. The input/output device 6 provides, for example, instructions to be executed by the instruction unit 3 of the control processing unit 1. The control processing unit 1 further includes a calculation unit 2. The instruction unit 3 controls the calculation unit 2 to perform arithmetic calculations when necessary for the execution of an instruction.

The control processing unit 1 also includes an access unit 4, which is also under the control of the instruction unit 3. The instruction unit 3 instructs the access unit 4 to utilize a memory control unit 7 in the storing of data in a main storage unit 8. Further, the instruction unit 3 controls the access unit 4 to utilize the memory control unit 7 to retrieve or fetch data and instructions from the main storage unit 8.

When the memory control unit 7 receives an access request from the instruction unit 3 through the access unit 4, the memory control unit 7 controls writing and reading operations involving the main storage unit 8.

The information processing apparatus also includes an input/output interface 9A and an auxiliary storage unit 9B. The auxiliary storage unit 9B connects to the central processing unit 1 by way of input/output interface 9A. The auxiliary storage unit 9B is an external storage device such as a magnetic disk device.

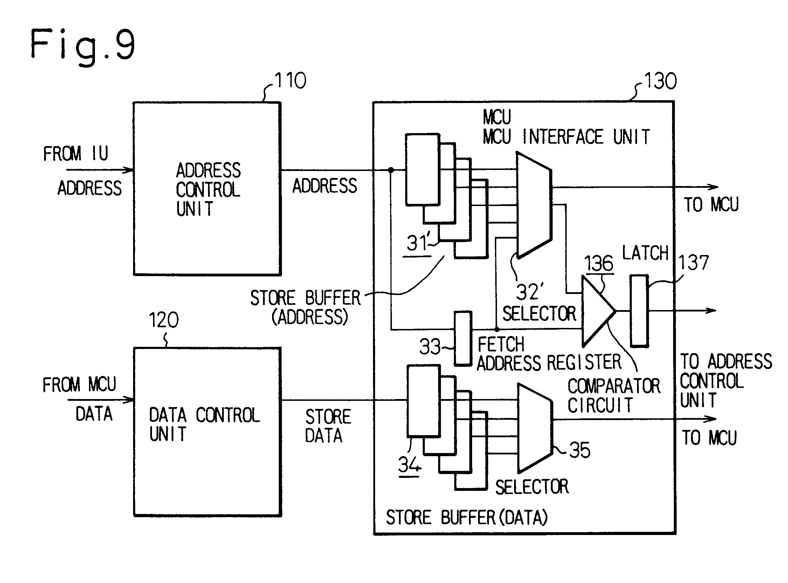

Figure 9 is a diagram illustrating a previously-considered form of the access unit 4 in an information processing apparatus. The access unit 4 includes an address control unit 110, which receives instructions from the instruction unit 3. The address control unit 110 translates logical addresses issued from the instruction unit 3 into real addresses. The logical addresses maybe logical store addresses or logical fetch addresses. The access unit 4 further includes an MCU interface unit 130, which receives the real addresses from the address control unit 110. The real addresses maybe store addresses or fetch addresses.

The access unit 4 also includes a data control unit 120, which transmits store data to the MCU interface unit 130 corresponding to each store address.

The MCU interface unit 130 includes a first group of store buffer registers called address store buffer registers 31', which receive store addresses and temporarily hold store addresses. The MCU interface unit 130 also includes a second group of store buffer registers called data store buffer registers 34. The data store buffer registers 34 receive store data corresponding to the store addresses and temporarily hold the store data.

The address control unit 110 further includes a cache directory (not shown) and a translation lookaside buffer TLB (not shown). The data control unit 120 further includes a cache (not shown). The cache performs high speed buffering of portions of data stored in the main storage unit 8. The data control unit 120 aligns and transfers data which is read from the main storage unit 8 to be written in the cache or the translation lookaside buffer of the address control unit 110. The address control unit 110 searches the cache of the data control unit 120 utilizing the cache directory.

When data corresponding to a store address is determined to be stored in the cache in the data control unit 120, the store data is written in an entry corresponding to the store address in the cache. If this particular type of cache is for example a store-through system, the store data is further written in one of the second group of data store buffer registers 34 in the MCU interface unit 130. The store data is written in respective ones of the second group of data store buffer registers 34 in the order of reception and temporarily held therein.

A problem occurs when the following circumstances arise. The instruction unit 3 in the control processing unit 1 requires data from the main storage unit 8. The instruction unit 3 transmits a logical fetch address to the address control unit 110, which is translated into a fetch address. A search operation for the data to be fetched is performed by using the cache directory in the address control unit 110 based on the logical fetch address translated into the fetch address. The address control unit 110 determines whether or not the data to be fetched is stored in the cache in the data control unit 120. When the data to be fetched is determined to be stored in the cache in the data control unit 120, the data is fetched from the cache and the data fetch operation is completed.

When the data to be fetched is not stored in the cache in the data control unit 120, the data must be fetched from the main storage unit 8. If the data to be fetched from the main storage unit 8 has the same address as the data stored in one of the second group of data store buffer registers 34, old data, which is currently stored in the address in the main storage unit 8, will be fetched instead of the data stored in one of the second group of data store buffer registers 34.

In order to solve this problem, the MCU interface unit 130 in the Figure 9 access unit includes a fetch address register 33 for temporarily holding the fetch address for fetching data from the main storage unit 8. The store addresses held in the respective registers in the first group of address store buffer registers 31' are each read out in turn through selector 32'. The store addresses are respectively compared with the fetch address held in the fetch address register 33 by comparator circuit 136. When one of the store addresses held in the first group of store buffer registers (the address store buffer registers) coincides with the fetch address, the fetch operation of the data in the address is suspended. The result of the comparison is latched in the latch circuit 137 to be transmitted to the address control unit 110. The address control unit 110 initiates the fetch operation after confirming the fact that the fetch address is different from each of the store addresses stored in the first group of address store buffer registers 31'.

The access unit 4 requires that the comparison result be transmitted from the MCU interface unit 130 to the address control unit 110, causing a delay in the initiation of the fetch operation. A first delay of 1.0t (one clock cycle) occurs in the operation of transferring the fetch address from the address control unit 110 to the MCU interface unit 130 and latching the fetch address in the fetch register 33. A second delay of 1.0t occurs in the operations of latching the result of the comparison of the fetch address with the store address in the latch 137 and transferring the result of the comparison from the latch 137 to the address control unit 110.

It is desirable to provide an information processing apparatus which can overcome the above-identified delay problem and thereby can significantly enhance the processing speed of the data fetch operation from the main storage unit.

An embodiment of a first aspect of the present invention can provide information processing apparatus comprising: a main storage unit; an interface unit connected to the main storage unit; an instruction unit providing fetch addresses and store addresses with corresponding store data; and an address control unit receiving the store addresses and the fetch addresses from the instruction unit, comparing each fetch address with store addresses, holding any fetch address which coincides with one of store addresses until store data corresponding to the one store address is stored in the main storage unit by way of the interface unit.

Reference will now be made, by way of example, to the accompanying drawings, in which:
Figure 1 is a diagram illustrating a basic address control unit in an information processing apparatus embodying the present invention;
Figure 2 is a diagram illustrating a basic access unit, particularly a basic MCU interface unit, in the information processing apparatus shown in Figure 1;
Figure 3 is a diagram illustrating an address control unit in an embodiment of the present invention;
Figure 4 is a diagram illustrating an MCU interface unit in the same embodiment;
Figure 5 is a diagram illustrating a data control unit in the same embodiment;
Figure 6 is a diagram illustrating a DAT control unit in the same embodiment;
Figure 7 is a timing diagram illustrating an example of the processing in an information processing apparatus embodying the present invention;
Figure 8 is a diagram illustrating a previously-considered information processing apparatus;
Figure 9 is a diagram illustrating an access unit in the Figure 8 information processing apparatus;
Figure 10 is a diagram illustrating an address control unit in the Figure 8 information processing apparatus;
Figure 11 is a diagram illustrating a MCU interface unit in the Figure 8 information processing apparatus; and
Figure 12 is a timing diagram illustrating an example of the processing in the Figure 8 information processing apparatus.

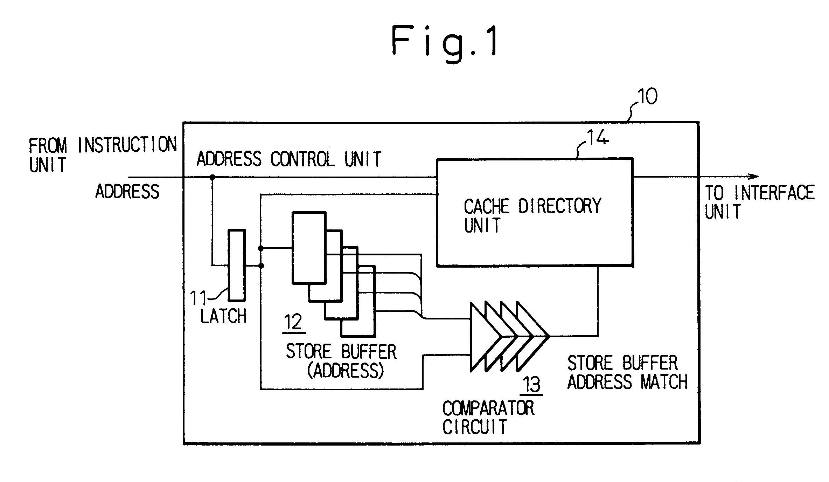

Figure 1 is a diagram illustrating a basic address control unit 10 in an information processing apparatus embodying the present invention. In Figure 1, an address control unit 10 is substituted for the address control unit 110 used in the Figure 9 apparatus and connects to an instruction unit such as the instruction unit 3 shown in Figure 8. The address control unit 10 includes a cache directory unit 14 for searching a cache directory (not shown) based on an address transferred from the instruction unit 3. The address control unit 10 determines whether an instruction from the instruction unit 3 is a fetch data or store data instruction. The cache directory unit 14 determines whether a particular address and corresponding data is located in the cache and/or the main storage unit 8 based on the result of a search of the cache (not shown).

The address control unit 10 in information processing apparatus embodying the present invention further includes a latch 11 which latches a fetch address received from the instruction unit. Each address store buffer register in a first group 12 of address store buffer registers stores a store address for a store request from the instruction unit 3 until the store request is transferred to the main storage unit 8. Comparator circuits 13 respectively compare the store addresses stored in their respective address store buffer registers 12 with the fetch address latched in the latch circuit 11 to determine whether the fetch address is the same as one of the store addresses in the address store buffer registers 12.

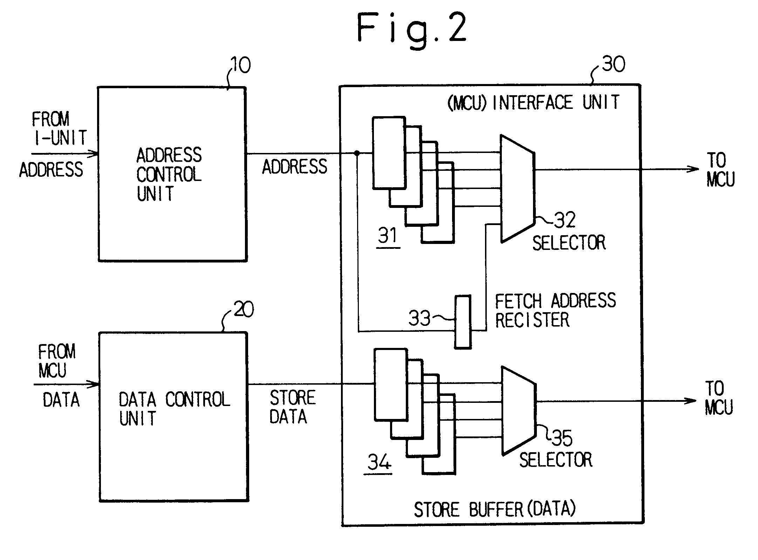

Figure 2 is a diagram illustrating a basic access unit in information processing apparatus embodying the present invention, which is used in a control processing unit, such as the control processing unit 1 shown in Figure 8, in place of the access unit 4 described hereinbefore. The address control unit 10 receives instructions from instruction unit 3 to fetch or store data associated with fetch or store addresses. The address control unit 10 transmits store addresses to MCU interface unit 30 and more particularly to a second group of address store buffer registers 31. A data control unit 20 transmits store data corresponding to the store addresses to the MCU interface unit 30 and more particularly to the data store buffer registers 34. A selector 32 respectively transmits store addresses from each of the address store buffer registers 31 to the main storage unit 8 through the memory control unit 7 synchronized with the transmission of corresponding stored data stored in data storage buffer registers 34 from each of the data storage buffer registers 34 to the main storage unit 8 by way of selector 35 and the memory control unit 7.

The address control unit 10 transmits a fetch address to the MCU interface unit 30, more particularly to fetch address register 33. The selector 35 selects the fetch address from the fetch address register 33 for transmission to the main storage unit 8 by way of memory control unit 7. Further, the data control unit 20 receives data from the main storage unit 8 by way of the memory control unit 7.

If the apparatus of Figures 1-2 embodying the present invention is compared with the Figure 9 access unit 4, the advantages of the present invention can be seen. In apparatus embodying the present invention, the comparison of the fetch address with the store addresses is realized in the address control unit 10 of the present invention as opposed to the MCU interface unit 130 of the Figure 8/9 apparatus. The Figures 1/2 apparatus has two groups of address store buffer registers as opposed to the Figures 8/9 apparatus which has only one group of address store buffer registers located in its access unit. Since the fetch address is not transferred to the MCU interface unit 30 in the apparatus of Figures 1/2 for a comparison of the fetch address with store addresses, the Figures 1/2 apparatus eliminates the first delay of 1.0t (one clock cycle), which occurs as a result of the operations of transferring the fetch address from the address control unit 110 to the MCU interface unit 130 and latching the fetch address in the fetch register 33.

In addition, since it is unnecessary to transfer the result of the comparison from the MCU interface unit 30 to the address control unit 10 in the Figures 1/2 apparatus, the apparatus also eliminates second delay of 1.0t, which occurs in the operations of latching the result of the comparison of the fetch address with the store address in the latch 137 and transferring the result of the comparison from the latch 137 to the address control unit 110. Thus, the address control unit 10 of Figures 1/2 recognizes the result of the comparison at a time 2.0t earlier than the address control unit 110 in the Figures 8/9 construction. Therefore, the fetch operation can be started at an earlier time than the Figures 8/9 construction and thus processing speed is greatly enhanced.

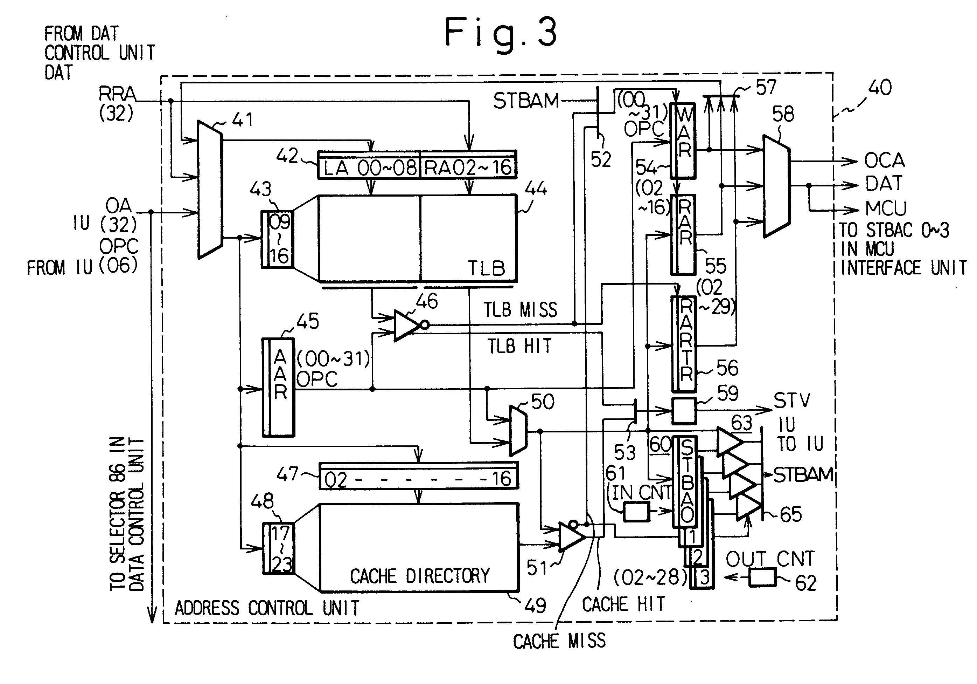

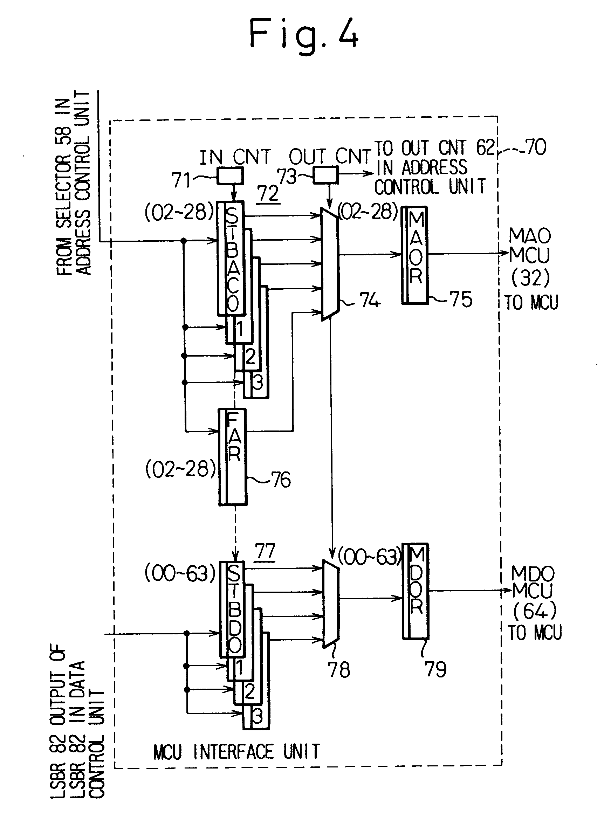

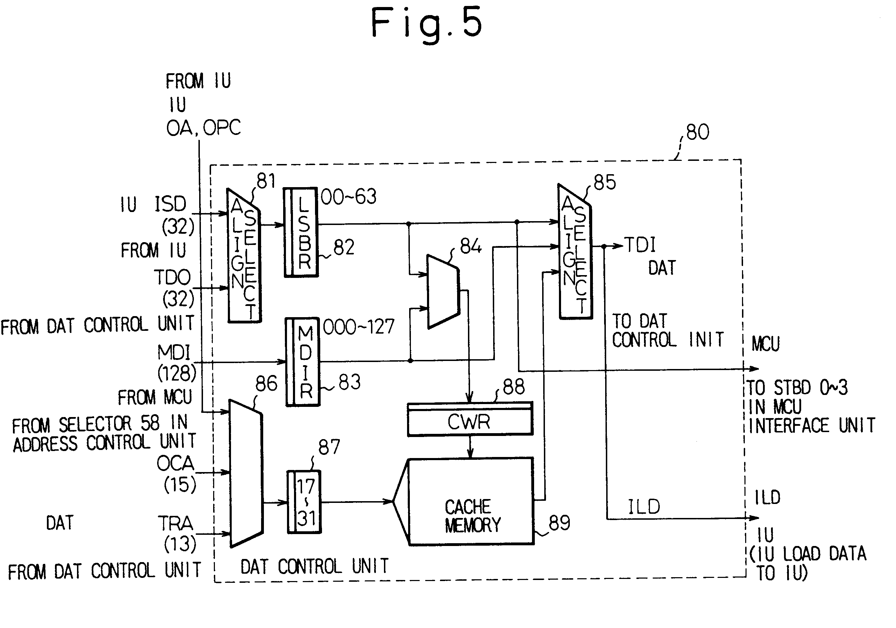

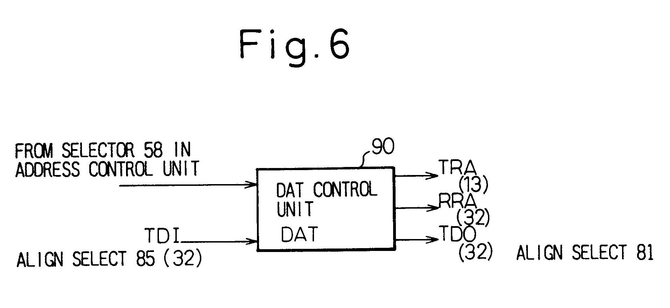

Figures 3 to 6 are diagrams illustrating the construction of the access unit in one embodiment of the information processing apparatus according to the present invention. Fig. 3 illustrates a construction of an address control unit. Fig. 4 illustrates a construction of an MCU interface unit. Fig. 5 illustrates a construction of a data control unit. Fig. 6 illustrates a construction of DAT control unit.

In Fig. 3 reference numeral 40 denotes an address control unit 41, 50, 57 and 58 each denote a selector, 42 denotes a TLB write register, 43 denotes a TLB search address register, 44 denotes a translation lookaside buffer (TLB), 45 denotes an access address register (AAR), 46 denotes a comparator circuit for detecting a TLB hit, 47 denotes a cache directory writing register, 48 denotes a cache directory search address register, 49 denotes a cache directory, 51 denotes a comparator circuit for detecting a cache hit, S2 denotes an OR gate, 53 denotes an AND gate, 54 denotes a wait address register (WAR), 55 denotes a real address register (RAR), 56 denotes a logical address register (RARTR), 59 denotes a status valid bit latch circuit, 60 denotes a first group of store buffer address registers (STBA0 to 3), 61 denotes an input register counter (IN CNT), 62 denotes an output register counter (OUT CNT), 63 denotes a group of comparator circuits, and 65 denotes an OR gate. In addition, RRA denotes a return real address, OPC denotes an operand code, and OCA denotes an operand cache address.

In Fig. 4, reference numeral 70 denotes an MCU interface unit, 71 denotes an input register counter (IN CNT), 72 denotes a second group of store buffer address registers (STBA0 to 3), 73 denotes an output register counter (OUT CNT), 74 denotes an address selector, 75 denotes an MCU address output register, 76 denotes a fetch address register (FAR), 77 denotes a group of store buffer data registers (STBD0 to 3), 78 denotes a data selector, and 79 denotes an MCU data output register. In addition, MA0 denotes an MCU address output, and MDO denotes an MCU data output.

In Fig. 5, reference numeral 80 denotes a data control unit, 81 denotes an align & select circuit (ALIGN SELECT), 82 denotes a load store buffer register (LSBR), 83 denotes an MCU data input register, 84 denotes a selector, 85 denotes an align & select (ALIGN SELECT), 86 denotes a selector, 87 denotes a cache search address register, 88 denotes a cache writing data register, and 89 denotes a cache memory. In addition, IDS denotes an instruction-unit-store data, TDO denotes an address translation data output, MDI denotes an MCU data input, TRA denotes an address translation real address, TDI denotes an address translation data input, and ILD denotes an instruction-unit-load data.

Operation of the address control unit 40 of Figure 3 will now be described in detail. The instruction unit 3 transmits an operand code OPC, indicating whether an access request is a store request or a fetch request to the address control unit 40. The operand code OPC may be for example six bits in length. If a fetch request is indicated by the OPC, store data ISD is transmitted by the instruction unit 3 to the data control unit 20. The store data ISD is transmitted to the align & select circuit 81 in the data control unit 80 in Figure 5. The instruction unit 3 transmits an operand address OA, which indicates a store address or a fetch address in the form of a logical address. The operand address OA may be for example thirty-two (32) bits in length. The operand code OPC and the operand address OA are inputted to the selector 41, which selects and transfers the operand code OPC and the operand address OA to the access address register (AAR) 45 and are latched by the access address register AAR 45. In addition, bits 9-16 of the operand address OA, for example, are latched to the translational lookaside buffer TLB search address register 43, and bits 17-25 of the operand address OA for example, which are equal to bits 17-25 of the real address, are latched in the cache directory search address register 48.

The content of the translation lookaside buffer TLB 44 is searched based on the bits 9-16 of the operand address OA, for example, which are latched in the TLB search address register 43. Nine (9) significant bits 00-08 of an output of the translation lookaside buffer 44, corresponding to the above 8 bits 9-16 of the operand address OA, are compared in the comparator circuit 46 with nine (9) significant bits of the operand address OA latched in the access address register AAR 45.

When the nine (9) significant bits 00-08 of an output of the translation lookaside buffer TLB 44 do coincide with the nine (9) significant bits of the operand address OA latched in the access address register AAR 45, an output for a TLB hit, which indicates that a real address corresponding to the operand address OA is registered in the translation lookaside buffer TLB 44, becomes active. The output for the TLB hit is applied to one of input buffer TLB terminals of an AND GATE 53. At this time, bits 02-16 of the real address output by the translation lookaside buffer TLB 44 are applied to one of input ports of each comparator circuit in the group 63 of comparator circuits, to the register in the first group 60 of store buffer registers and to the real address register RAR 55.

When the nine (9) significant bits 00-08 of an output of the translation lookaside buffer TLB 44 do not coincide with the nine (9) significant bits of the operand address OA latched in the access address register AAR 45, an output for a TLB miss, which indicates that the real address corresponding to the operand address OA is not registered in the translation lookaside buffer TLB 44, becomes active. The output for the TLB miss is applied to one of input terminals of the OR gate 52 and to a write control terminal of the logical address register RARTR 56.

The operand address OA is transmitted from the logical address register RARTR 56 through the selector 58 to a DAT control unit 90 in Figure 6. The DAT control unit 90 controls operations of the well-known dynamic address translation. The DAT control unit 90 reads the address translation data corresponding to the operand address OA from a memory map in the main storage unit 8, and writes (registers) the data in the translation lookaside buffer TLB 44 in the address control unit 40.

To perform this operation, the DAT control unit 90 transmits an address of the main storage unit 8, at which address translation data indicating a real address corresponding to the operand address OA is stored, to the address control unit 40 through the return real address RRA port. The address translation data is transmitted through the selector 41 in the address control unit 40 to the cache directory search address register 48. The cache directory 49 is searched to determine whether or not the address translation data is stored in a cache memory 89 shown in Figure 5.

When it is determined that the address translation data is stored in the cache memory 89 in Figure 5, the address translation data is transferred from a translation real address output port TRA through the selector 86 in the data control unit 80 to the cache search address register 87. Then, the address translation data is read from the cache memory 89, and is output through the align and select circuit 85. The output of the align and select circuit 85 is received by the DAT control unit 90 as a translation data input TDI, and then the translation data input TDI is supplied through the RRA output port to the address control unit 40. In the address control unit 40, bits 02 to 16 of the translation data input TDI are written in the terminals RA02 to 16 of the TLB write register 42. At the same time, bits 00 to 08 of a logical address held in the wait address register WAR 54 are applied through the selector 41 to the input terminals LA00 to 08 of the TLB write register 42, and are written therein. In addition, bits 09 to 16 of the logical address held in the wait address register WAR 54, are transferred through the selectors 57 and 41 to the TLB search address register 43, and is used as an address of the translation lookaside buffer (TLB) 44 at which the above content of the TLB write register 42 is to be stored. Thus, the registration in the translation lookaside buffer TLB 44 is completed.

When it is determined that the address translation data is not stored in the cache memory 89 in Figure 5, the address translation data is transferred from a return real address output port RRA through the selector 41, the access address register AAR 45, the selector 50, the real address register RAR 55 and the selector 58 to the fetch address register FAR 76 in the MCU interface unit 70 shown in Figure 4. Then, the fetch operation from the main storage unit is performed. The fetched data is input from an MDI input port, and transferred through the MCU data input register MDIR 83, the selector 84, the cache memory write data register 88 to the cache memory 89 to write the address translation data therein. Parallel to the above, the address translation data output from the MCU data input register MDIR 83 is transferred through the align and select circuit 85 to the DAT control unit as the TDI input. The TDI input is output from the RRA output port, and is then written in the translation lookaside buffer TLB 44 of the address control unit 40, in the same manner as explained above. During this operation, the above operand address OA and the operand code OPC are held in the wait address register WAR ⁵4 to wait for the registration in the translation lookaside buffer TLB 44.

On the other hand, the cache directory 49 is searched based on the bits 17 to 25 of the operand address OA latched in the cache directory search address register 48, and the output of the cache directory 49 (bits 02 to 16 of a real address) are applied to one of input ports of the comparator circuit 51. Significant bits 02 to 16 (a real address obtained by translation) of the output of the translation lookaside buffer TLB 44 are applied through the selector 50 to the other one of the input ports of the comparator circuit 51. When both the inputs of the comparator circuits coincide, an output of the comparator circuit 51, indicating a cache hit, becomes active, and the output indicating the cache hit is applied to the other terminal of the AND gate 53. An output of the comparator circuit 51, indicating a cache miss, is applied to one of input terminals of the OR gate 52, and to the group 63 of comparator circuits as a control signal to activate the group 63 of comparator circuits. Thus, each comparator circuit in the group 63 of comparator circuits can detect coincidence of the fetch address with a store address stored in any register in the first group 63 of store buffer address registers (STBA0 to 3), only in the case of cache miss. This construction is provided because the fetch operation from the main storage unit is required when data requested to be fetched is not stored in the cache memory 89. The output of the AND gate 53 (status valid STV) becomes active in the case of the TLB hit and the cache hit, and the result is latched in the latch circuit 59 to be transferred to the instruction unit IU 3.

In the case wherein the operand code OPC indicates a fetch request and the cache hit is determined, data is read out from the cache memory 89 in the data control unit 80, and is then supplied through the align and select circuit 85 to the instruction unit IU 3 as an instruction-unit-load data ILD.

In the case wherein the operand code OPC indicates a fetch request and the cache miss is determined, the fetch address is transferred to the fetch address register FAR 76 in the MCU interface unit 70 through the real address register RAR 55 or through a route passing the translation lookaside buffer TLB 44→the selector 50→the real address register RAR 55, and the data is fetched from the main storage unit 8 through the MCU interface unit 70. At the same time, the operand address OA and the operand code OPC are held in the wait address register WAR 54, and the real address translated from the operand address OA is held in the real address register RAR 55 to wait for the data read out of from the main storage unit 8. The data read out from the main storage unit 8 is supplied to the instruction unit IU 3 through the MCU data input register MDIR 83 and the align and select circuit 85 in the data control unit 80.

In the case wherein the operand code OPC indicates a store request and the cache hit is determined, the store data from the instruction unit IU 3 is transferred through the align and select circuit 81, the load store buffer register LSBR 82, and the selector 84. The store data is then latched in the cache data write register CWR 88, and written in the cache memory 89. At the same time, the bits 17 to 31 of the operand address OA from the instruction unit IU 3 is transferred to the cache search address register 87 through the selector 86 in the data control unit 80, and writing operation is performed in the corresponding entry of the cache memory 89. The above store data is also written in the main storage unit 8 by the MCU interface unit 70, isolated from the address control unit 40 and the data control unit 80. In this case, the store address is transferred through the selector 50, and is then written in one of the registers in the first group 60 of store buffer address registers (STBA0 to 3), and one of the registers in the second group 72 of store buffer address registers (STBAC0 to 3) in the MCU interface unit 70. The store data from the instruction unit IU 3 is transferred through the align and select circuit 81 and the load store buffer register LSBR 82, and is written in one of the registers in the group 77 of store buffer data registers (STBD0 to 3) in the MCU interface unit 70. The control regarding which one of the registers in each of the three groups of registers into which each address or data is to be written, is carried out by the input register counter (IN CNT) 61 in the address control unit 40, and the input register counter (IN CNT) 71 in the MCU interface unit 70. The input register counter (IN CNT) 61 controls the first group 60 of store buffer address registers (STBAO to 3) in the address control unit 40, and the input register counter (IN CNT) 71 controls the second group 72 of the store buffer address registers (STBAC0 to 3) and the group 77 of store buffer data registers (STBDO to 3) in the MCU interface unit 70. These three groups of registers are controlled so that all of the three groups operate in the same manner, except that the operation of writing the store address in the first group 60 of store buffer address registers (STBA0 to 3) is in advance by 1t (clock cycle) of the operations of writing the same address in the second group 72 of store buffer address registers (STBAC0 to 3) and the operation of writing corresponding data in the group 77 of store buffer data registers (STBDO to 3). When all of the registers in the groups of registers are occupied by store addresses and store data, following store processing can no longer be accepted. Therefore, an operand code OPC, an operand address OA, and a real address for the store request are held in the wait address register WAR 54 and the real address register RAR 55, and the address control unit 40 goes into a waiting state.

In the case wherein the operand code OPC indicates a store request and the cache miss is determined, the operation is the same as the above operation of storing data in the main storage unit without the writing of the same in the cache memory.

In the case wherein the operand code OPC indicates a fetch request and the cache miss is determined, or when a cache miss is determined when the DAT control unit 90 searches the cache directory 49 for an address translation data, a fetch operation from the main storage unit is required. In such a case, the fetch operation from the main storage unit must be suspended until a store operation at the same address as the fetch address is commenced by the MCU interface unit 70 (until the store address and the corresponding store data are transferred to the memory control unit MCU) in order to prevent the reading of data before completion of a store operation. Therefore, the group 63 of the comparator circuits determines whether or not the fetch address coincides with any of store addresses stored in the first group 60 of store buffer address registers (STBA0 to 3). The fetch address is applied to one of input ports of each comparator circuit in the group 63 of the comparator circuits, and the output of each register in the first group 60 of store buffer address registers is applied to the other input port of the corresponding comparator circuit in the group 63 of comparator circuits. Thus, the determination of the coincidence between the fetch address and the content of each register in the group 60 of store buffer address registers can be performed simultaneously. The outputs of the comparator circuits in the group 63 of comparator circuits are applied to the OR gate 65, and a store buffer address match signal STBAM becomes active when the store address stored in any of the registers in the group 60 of store buffer address registers coincides with the fetch address. This signal is applied to one of input terminals of the OR gate 52.

The OR gate 52 receives the signal which is output from the comparator circuit 46 and which becomes active in the case of the TLB miss, the signal which is output from the comparator circuit 51 and which becomes active in the case of the cache miss, and the above store buffer address match signal STBAM at the input terminals thereof, and the outputs thereof are supplied as write control signals for the wait address register WAR 54 and the real address register RAR 55. Thus, the operand address OA and the operand code OPC are held in the wait address register WAR 54 and the translated real address is held in the real address register RAR 55 in the case of the TLB miss, the cache miss, or the store buffer address match STBAM, to wait for the registration in the translation lookaside buffer TLB 44, of the address translation data which has not been registered therein; the fetching of data which is not registered in the cache memory 89, from the main storage unit, and storing of the same in the cache memory 89; or the start of the store processing in the store address which is stored in the group of store buffer registers in the MCU interface unit 70 and coincides with the fetch address.

The above store buffer address match signal STBAM is reset when the MCU interface unit 70 starts to request to the main storage unit for the store processing in the store address with which the above coincidence is detected (i.e., when the store address and the store data are respectively transferred from the MCU address output register MAOR 75 and the MCU data output register MDOR 79 to the memory control unit MCU 7).

The store address and the store data respectively supplied to the MCU address output register MAOR 75 and the MCU data output register MDOR 79 in the MCU interface unit 70, are selected by the selectors 74 and 78, respectively. These selecting operations are controlled by the output register counter (OUT CNT) 73 so that corresponding store address and store data are simultaneously selected in the selectors 74 and 78. In addition, the store address and the store data selected as above and latched in the MCU address output register MAOR 75 and the MCU data output register MDOR 79, are removed from the second group 72 of store buffer address registers (STBAC0 to 3) and the group 77 of store buffer data registers (STBDO to 3). Further, information on the above selection in the MCU interface unit 70 is transferred from the output register counter (OUT CNT) 73 to the output register counter (OUT CNT) 62 in the address control unit 40, and the output register counter (OUT CNT) 62 removes the store address output from the second group 72 of store buffer address registers (STBAC0 to 3) in the MCU interface unit 70 from the first group 60 of store buffer address registers (STBAC0 to 3). Thus, the store buffer address match signal STBAM becomes inactive, and the address control unit 40 reads the operand address OA and the operand code OPC held in the wait address register WAR 54 and the translated real address held in the real address register RAR 55 to start the fetch processing from the main storage unit. In this case, the searching cache directory 49 is carried out again, and the access to the main storage unit is carried out only when the cache miss is determined. For the access to the cache memory 89, the operand address OA held in the wait address register WAR 54 is output from the selector 58 as an operand cache address OCA to supply the same through an OCA port of the selector 86 in the data control unit 80.

The above explanation is provided based on the assumption that the cache memory 89 operates in the store-through system. In the store-through system, immediately after data is stored in the cache memory 89, the data is stored in the corresponding address of the main storage unit through the store buffer. However, as understood from the above explanation, the advantages and features of the present invention are effective regardless of the timing of the input of the store request (information) in the store buffer. For example, the present invention is effective for the cache memory of the store-back system (wherein data is stored only in the cache memory in a normal store operation, and the whole content of each data block in the cache memory is block transferred to the main storage unit when the data block is replaced with another data block.

The above operations of the access unit in the above-described embodiment of the information processing apparatus according to the present invention, are controlled by a sequencer (constructed by a hardware logic circuit and not shown). The sequencer is provided for both the address control unit and the DAT control unit. Further, a controller (constructed by a hardware logic circuit) is provided for both the data control unit 80 and the MCU interface unit 70. The sequencer for the address control unit determines the above operations based on: (1) whether or not inputs of an operand code OPC or an operand address OA from the instruction unit IU are present; (2) TLB hit or TLB miss; (3) cache hit or cache miss; (4) whether or not the store buffer registers are fully occupied; (5) status of the DAT control unit; (6) whether or not the store buffer address match signal STBAM is active; (7) the conditions requiring the waiting in the wait address register WAR; and the like; to control the selectors registers translation lookaside buffer TLB, the cache directory, and the like in the construction of Figure 3. The sequencer for the DAT control unit is activated by a request signal (not shown) transferred (at the same time as the above explained transfer of the operand address OA) from the sequencer for the address control unit 40 to the sequencer for the DAT control unit 90 when the TLB miss is detected in the address control unit 40 as explained above, and sends a complete signal (not shown) to the sequencer for the address control unit 40 when the transfer of the address translation data to the address control unit 40 is completed. The controllers for the data control unit 80 and the MCU interface unit 70, control the selectors, the registers, the cache memory 89, and the like in the data control unit 80 and the MCU interface unit 70, under control of the sequencer for the DAT control unit 90 during the fetch processing of the address translation data, and under control of the sequencer for the address control unit 40 in the case other than the fetch processing of the address translation data.

The address control unit 40 of Figure 3, the MCU interface unit 70 of Figure 4, the data control unit 80 of Figure 5, and the DAT control unit 90 of Figure 6, can each be constructed on a large scale integrated circuit (LSI) chip. If both the address control unit 40 and the MCU interface unit 70 can be constructed on one large scale integrated circuit (LSI) chip, the provision of the first and second groups 12 and 31 of store buffer address registers in the address control unit 40 and the MCU interface unit 70 may be unnecessary. However, since the relative size of the translation lookaside buffer TLB 44 and the cache directory 49 are large in practice, the group 77 of store buffer data registers (each having a width of 64 or 128 bits) cannot be constructed on the same large scale integrated circuit (LSI) chip as the translation lookaside buffer TLB 44 and the cache directory 49, due to the limitation of the number of gates. Otherwise, it may be considered that only the group 63 of comparator circuits may be constructed in the address control unit 40 and they maybe connected with the second group 72 of store buffer address registers in the MCU interface unit 70. However, in such a construction, a great amount of wiring and a great number of pins must be provided between the address control unit and the MCU interface unit. Therefore,a construction embodying the present invention is much more advantageous than the above constructions.

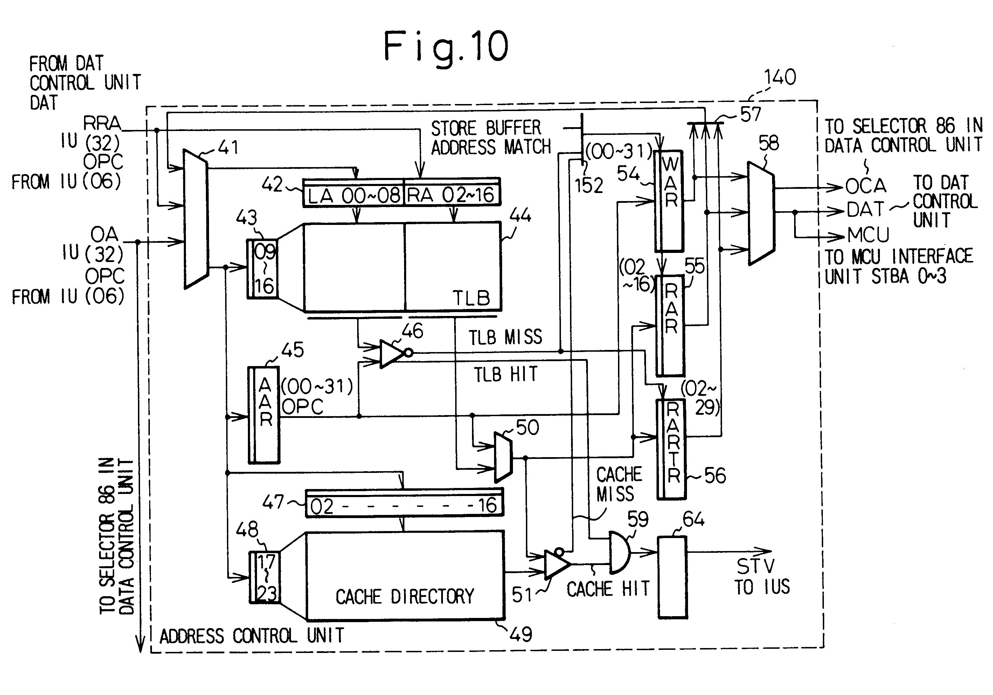

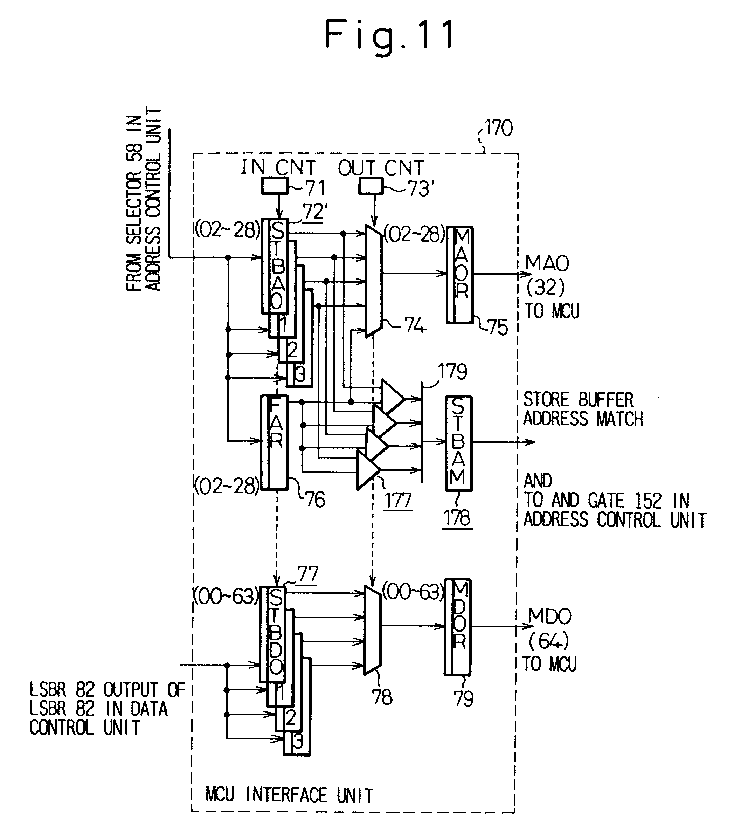

Figures 10 (address control unit) and 11 (MCU interface unit) are diagrams illustrating constructions which are generated by modifying the constructions of Figs. 3 to 6 in accordance with the previously-considered construction as indicated in Fig. 9 wherein the fetch address is compared with the store addresses stored in the store buffer, in the MCU interface unit, and the comparison result is transferred back to the address control unit. The constructions of Figs. 10 and 11 are indicated here for the purposes of comparing the Figures 3 to 6 construction with the Figure 9 construction. Regarding the data control unit and the DAT control unit, there is no difference between the two constructions.

Figure 10 is a diagram illustrating the construction of the address control unit in previously-considered information processing apparatus.

One difference in the construction of the address control unit 140 from the address control unit 40 of Figure 3 (in one embodiment of the present invention), is that the construction for generating the store buffer address match signal STBAM, comprised of the first group 60 of store buffer address registers, the group 63 of comparator circuits, the OR gate 65, the input register counter 61, and the output register counter 62, is not provided in the construction of the address control unit 140 of Figure 10. Another difference is that, in the construction of the address control unit 140 of Figure 10, the store buffer address match signal which is generated in the MCU interface unit 54 (Figure 11) located in the stage following the address control unit, and which is transferred to the address control unit, instead of the store buffer address match signal STBAM generated in the address control unit, is applied to the OR gate 152 which generates the signal for controlling the wait address register WAR 54 and the real address register RAR 55. Figure 11 is a diagram illustrating the construction of the MCU interface unit 170 in a previously-considered information processing apparatus. In the MCU interface unit 170 of Figure 11, a group 177 of comparator circuits for comparing the fetch address with outputs of a group 72 of store buffer address registers, an OR gate 179, and a latch circuit 178 for latching the store buffer address match signal, and transferring the same to the address control unit 140, are provided.

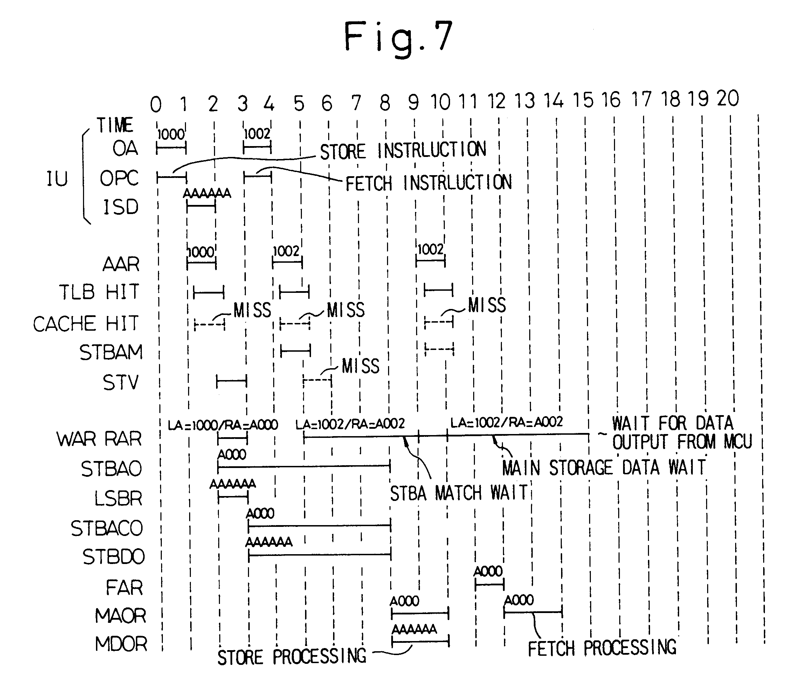

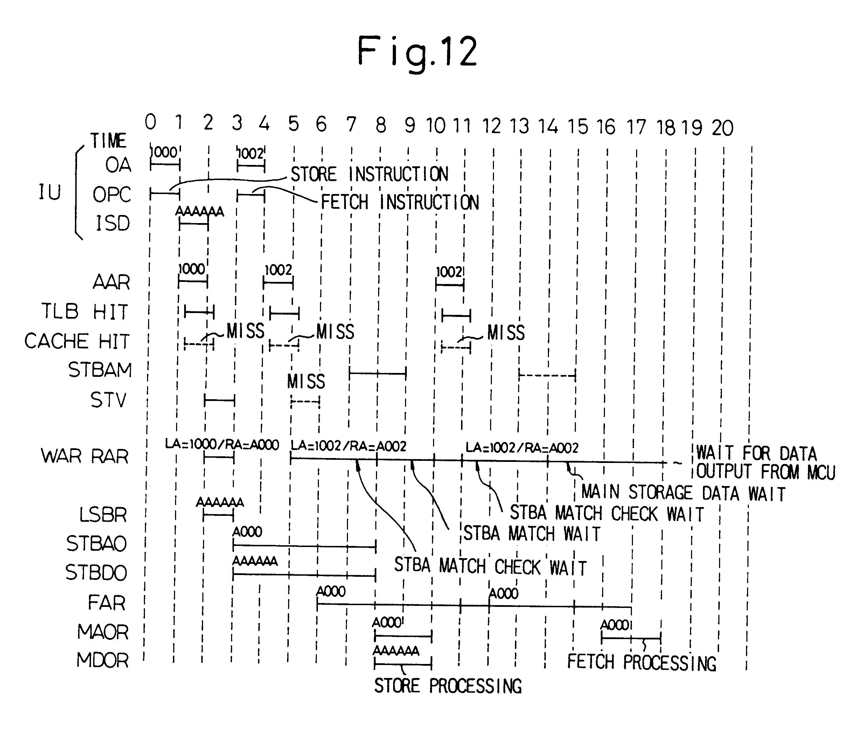

Further, Figures 7 and 12 are diagrams illustrating timing of processing in the cases when the same store request is received from the instruction unit IU, and then a fetch request is received. Figures 7 and 12 are provided for indicating a difference in the processing speed in the fetch operation, between the above two constructions (Figures 3 to 6 on the one hand, and Figures 10/11 on the other hand).

Figure 7 is a diagram illustrating an example timing of the processing in the Figures 3 to 6 embodiment, and Figure 12 is a diagram illustrating an example timing of the processing in the Figures 10/11 information processing apparatus. In both cases, at time 0 (the times are indicated by integers each indicating a multiple of the clock cycle), a store instruction requesting to store a store data "AAAAA" in a store address "1000" is received from the instruction unit IU, and at time 3, a fetch instruction requesting to fetch a data from a fetch address "1002" is received. The width of each register in the group 77 of store buffer data registers is, for example, 64 bits (8 bytes) or 128 bits (16 bytes). Since the difference between the above store address "1000" and the fetch address "1002" is two bytes, these addresses are deemed to be the same address for the above registers in the groups 72 and 72' of store buffer address registers. Therefore, the fetch operation from the fetch address "1002" can be started after the store operation in the store address "1000" is started.

In Figure 7, at times 4 to 5, a TLB hit and a cache miss are determined. Therefore, a fetch operation from the main storage unit is required. However, since the fetch address differs by two bytes only from the store address, the store buffer address match signal STBAM is active, and from time 5 to 9 (indicated as "STBA MATCH WAIT), an operation must be stopped until the store buffer address match signal STBAM becomes inactive. At time 8, a real address "A000" which is translated from the store address "1000" for the above store request is transferred from the MCU address output register MAOR 75 in the MCU interface unit 70 to the memory control unit MCU 7, and the store data "AAAAA" is transferred from the MCU data output register MDOR 79 in the MCU interface unit 70 to the memory control unit MCU 7. Thus, at time 9 (1t after the above time 8), by performing an access processing for the fetch operation (beginning with the search operations of the translation lookaside buffer (TLB) and the cache), it is determined that the store buffer address match signal STBAM becomes inactive. In response to the inactive store buffer address match signal STBAM, at time 11, the fetch address is transferred to the fetch address register FAR 76 in the MCU interface unit 70, and then, at time 12, the fetch address held in the fetch address register FAR 76 is transferred to the MCU address output register MAOR 75, and further transferred to the memory control unit MCU 7.

On the other hand, in the case of Figure 12, after a cache miss is detected for the fetch request at times 4 to 5, the fetch address is transferred to the fetch address register FAR 76 in the MCU interface unit 170 at time 6, and the comparison result of the group 177 of comparator circuits in the MCU interface unit 170 is latched in the latch circuit 178 at times 7 to 8. The comparison result is further transferred from the latch circuit 178 to the address control unit at time 8. Thus, a delay corresponding to the duration from time 5 to 8 (indicated in Figure 12 by STBA MATCH CHECK WAIT), is generated after the cache miss for the fetch request is detected, until the comparison result of the fetch address and the store addresses is recognized by the address control unit 170. Since the preceding store processing is the same in both cases of Figs. 7 and 12, at time 8, a real address "A000" which is translated from the store address "1000" for the above store request is transferred from the MCU address output register MAOR 75 in the MCU interface unit 70 to the memory control unit MCU 7, and the store data "AAAAA" is transferred from the MCU data output register MDOR 79 in the MCU interface unit 70 to the memory control unit MCU 7. Thus, at time 9, it is determined that the store buffer address match signal STBAM becomes inactive. In response to the inactive store buffer address match signal STBAM, at time 10, by performing an access processing for the fetch operation (beginning with the search operations of the translation lookaside buffer (TLB) and the cache), a TLB miss is determined, and further a cache miss is determined since no fetch operation is carried out after the above determination of the cache miss at times 4 to 5. Thus, the store buffer address match wait state continues for a duration of 3t, from time 11 to 14, similar to the above duration from 5 to 8. In addition, since the store buffer address match signal STBAM is detected to be inactive at time 13, the fetch operation to the main storage unit is started from time 14 1t after time 13, and the inactiveness of the store buffer address match signal STBAM is detected. In response to this, a real address "A000" of a block including the address "A002" which is translated from the fetch address is transferred to the fetch address register FAR 76 in the MCU interface unit 170, and at time 16, the fetch address held in the fetch address register FAR 76 is transferred to the MCU address output register MAOR 75, and is further transferred to the memory control unit MCU 7. Namely, the timing in Fig. 12 is delayed by 4t compared with the timing of Figure 7.

As explained above, in an embodiment of the present invention, the delay after the detection of the cache miss to the detection of the store buffer address match signal STBAM corresponding to the fetch request (indicated as STBA MATCH CHECK WAIT in Fig. 12) is eliminated, and therefore the processing speed can be improved greatly compared with previously-considered constructions.

As explained above, in information processing apparatus embodying the present invention, the data fetch speed can be greatly enhanced.

While the invention has been illustrated and described in detail in the drawings and foregoing description, it will be recognized that many changes and modifications will occur to those skilled in the art. It is therefore intended, by the appended claims to cover any such changes and modifications as fall within the true spirit and scope of the invention.

## Claims

1. An information processing apparatus comprising:
a main storage unit;
an interface unit connected to the main storage unit;
an instruction unit providing fetch addresses and store addresses with corresponding store data; and
an address control unit receiving the store addresses and the fetch addresses from the instruction unit, comparing each fetch address with store addresses, holding any fetch address which coincides with one of store addresses until store data corresponding to the one store address is stored in the main storage unit by way of the interface unit.

2. The information processing apparatus according to claim 1, further comprising a data control unit receiving the store data from the instruction unit and storing the store data in the corresponding store addresses by way of the interface unit.

3. The information processing apparatus according to claim 1, further comprising a data control unit receiving data corresponding to the fetch address from the main storage unit when the fetch address does not coincide with any of the store addresses.

4. An information processing apparatus comprising:
a main storage unit storing data;
an instruction execution unit outputting a store request requesting to store data in a first address in the main storage unit, and outputting a fetch request requesting to fetch data in a second address in the main storage unit;
an address and data control unit connected to the instruction execution unit comprising:
cache means storing a portion of the data stored in the main storage unit,
cache hit determining means for receiving first fetch request from the instruction execution unit and determining whether the data stored in the second address of the main storage unit is stored in the cache means, and
cache read-out means for accessing a third address in the cache means corresponding to the second address to read out the data therefrom and supplying the data to the instruction execution unit;
an interface unit receiving the first address for the store request and the data requested to be stored from the address and data control unit, storing in a store buffer the first address for the store request and data requested to be stored, accessing the main storage unit in response to the store request, and storing the data requested to be stored in the first address of the main storage unit; and
the address and data control unit further comprises:
a store address buffer receiving the store request, and storing therein the first address for the store request until the storing of the data requested to be stored in the first address in the main storage unit by way of the interface unit has begun,
fetch address comparing means for determining whether the second address for the fetch request coincides with the first address stored in the store address buffer when the cache hit determining means determines that the data stored in the second address of the main storage unit is not stored in the cache means, and
fetch control means for fetching the data from the second address of the main storage unit in response to the fetch request when the fetch address comparing means determines that the second address for the fetch request does not coincide with the first address stored in the store address buffer, and suspending the data fetch operation from the second address of the main storage unit until the first address is deleted from the store address buffer, when the fetch address comparing means determines that the second address for the fetch request coincides with the first address stored in the store address.

5. The information processing apparatus according to claim 4, wherein the address and data control unit further comprises a latch circuit for latching the store request and the fetch request.

6. The information processing apparatus according to claim 4 or 5, wherein the store buffer holds the first address and the data requested to be stored, for store requests, and
the store address buffer holds the first address for the store requests.

7. The information processing apparatus according to any one of claims 4, 5 and 6, wherein the fetch address comparing means comprises comparator circuits each corresponding to the respective first addresses stored in the store address buffer for store requests.

8. An information processing apparatus comprising:
a main storage unit for storing data;
an instruction execution unit outputting a store request requesting to store data in a first address in the main storage unit, and outputting a fetch request requesting to fetch data in a second address in the main storage unit;
an access unit provided between the main storage unit and the instruction execution unit, comprising:
cache means for storing a portion of the data stored in the main storage unit,
cache hit determining means for receiving the first fetch request from the instruction execution unit, and determining whether the data stored in the second address of the main storage unit is stored in the cache means, and
cache read-out means for accessing an address in the cache means corresponding to the second address to read out the data therefrom, and supplying the data to the instruction execution unit;
an interface unit receiving and storing in a store buffer the first address for the store request and the data requested to be stored, accessing the main storage unit in response to the store request, and storing the data requested to be stored, in the first address of the main storage unit;
a store address buffer receiving the store request, and storing therein the first address for the store request until the store operation in the first address by the interface unit has begun;
fetch address comparing means for determining whether the second address for the fetch request coincides with the first address stored in the store address buffer when the cache hit determining means determines that the data stored in the second address of the main storage unit is not stored in the cache means; and
fetch control means for fetching the data from the second address of the main storage unit in response to the fetch request when the fetch address comparing means determines that the second address for the fetch request does not coincide with the first address stored in the store address buffer, and suspending the data fetch operation from the second address of the main storage unit until the first address is deleted from the store address buffer, when the fetch address comparing means determines that the second address for the fetch request coincides with the first address stored in the store address buffer.

9. The information processing apparatus according to claim 8, wherein the address and data control unit further comprises a latch circuit for latching the store request and the fetch request.

10. The information processing apparatus according to claim 8 or 9, wherein the store buffer holds the first address and the data requested to be stored, for store requests, and
the store address buffer holds the first address for the store requests.

11. The information processing apparatus according to claim 8, 9 or 10, wherein the fetch address comparing means comprises a plurality of comparator circuits each corresponding to the respective first addresses stored in the store address buffer for the store requests.
